# EUROPEAN PATENT APPLICATION

(11) **EP 3 723 013 A1**
(43) Date of publication of application: **14.10.2020**
(21) Application number: 19168945.4
(22) Date of filing: 12.04.2019
(51) Int. Cl.: G06Q 10/08

(54) **ASSET TRACKING SYSTEM AND METHOD**

(71) Applicant: Siemens Aktiengesellschaft, 80333 München (DE)
(72) Inventor: Göbel-Ralph, Priska, 91054 Erlangen (DE); Holzner, Thomas, 13465 Berlin (DE); Hotsch, Sönke, 10249 Berlin (DE); Sokol, Joachim, 82008 Unterhaching (DE); Weinhold, Maximilian, 10249 Berlin (DE); Ziener, Philipp, 10787 Berlin (DE)

(57) **Abstract**

An asset tracking system for tracking an asset in an industrial process involving the asset passing between a plurality of realms with limited mutual trust between the realms comprises: a distributed blockchain-based database system; a plurality of asset tracking devices each configured to acquire one or more asset attribute values of the asset, wherein each of the realms includes at least one of the plurality of asset tracking devices; and an asset lifetime handler device configured to maintain, in a ledger of the distributed database system, based on the asset attribute values respectively acquired over time by a respective one of the plurality of asset tracking devices, an asset lifetime passport, ALP, the ALP constituting a digital representation of a history of the acquired asset attribute values of the asset.

Also provided is a corresponding asset tracking method.

## Description

The present invention relates to the field of supply chain management (SCM), and, more particularly, to an asset tracking (AT) system and method for tracking an asset in an asset-based industrial process.

In an industrial process, an asset, such as a good, a machine part, a tool and the like, may be passed along between various sites such as plants, facilities and the like. There is a need to automatically track the asset, so as to provide an operating entity that controls the industrial process, such as a human operator, an automated controller and the like, with information about the whereabouts, condition, processing state and the like of each asset involved in the industrial process. Conventionally, such information on the asset is acquired, stored and processed by an enterprise resource planning, ERP, system that is owned and operated by a stakeholder of the industrial process.

In a global supply chain, an asset may be passed along between different realms, wherein each realm is owned and operated by a different stakeholder. Each stakeholder typically owns and operates their own proprietary IT or ERP system. In order to enable the asset to be tracked across the multiple realms, point-to-point connections such as EDI may be implemented between the multiple IT or ERP systems. However, there may be a lack of transparency, integrity and trust in the information that is tracked while the asset passes along between the different realms.

In particular, lack of mutual trust in the tracked information may result from incompleteness of the data, lack of data records and transactional information, lack of a possibility to validate the tracked information, large time delays until all required information is complete, etc.

Since different stakeholders may employ different data models, solutions and metrics to track their respective assets, there may also be issues with consistency, flexibility, interoperability, media breaches when the asset passes from one realm into another realm, etc.

Existing asset tracking solutions also fail to offer flexibility with regards to the onboarding of new stakeholders, updating of security requirements, inserting and updating of asset classes and the like.

It is one object of the present invention to improve the tracking of an asset in an asset-based industrial process also in a case wherein the asset is passing between a plurality of realms and there is limited mutual trust between the plurality of realms.

Accordingly, there is provided an asset tracking system for tracking an asset in an asset-based industrial process involving the asset passing between a plurality of realms, wherein there is limited mutual trust between the plurality of realms. The asset tracking system comprises: a distributed database system configured to host a consensus-based ledger of transactional records; a plurality of asset tracking devices each configured to acquire one or more asset attribute values of the asset, wherein each of the realms includes at least one of the plurality of asset tracking devices; and an asset lifetime handler device configured to maintain, in the ledger of the distributed database system, based on the asset attribute values respectively acquired over time by a respective one of the plurality of asset tracking devices, an asset lifetime passport, ALP, the ALP constituting a digital representation of a history of the acquired asset attribute values of the asset.

The proposed asset tracking system may advantageously protect the history of the asset attribute values from fraudulent manipulations and may improve trust in the contents of the ALP throughout the plurality of realms. Further, the asset lifetime handler device may provide for a level of abstraction of the underlying distributed database system, thereby simplifying the use thereof. Yet further, a same digital representation, such as an XML representation and the like, of the history of the asset attribute values acquired over time may be used throughout the plurality of realms. Thus, it may advantageously be possible to provide an efficient-to-use asset tracking system for inter-realm asset tracking that is free from inconsistencies, media breaches and other complexity, compatibility and trustworthiness issues.

Herein, the term "asset" may refer to a physical asset. The physical asset may be a physical object that is of at least subjective value to a stakeholder in an asset-based industrial process, and that has at least one digitally trackable attribute of interest.

The term "asset" may also refer to a digital asset, such as intellectual property, documents, bills, licenses, print layout parts and the like.

The term "realm" may refer to a physical or geographical area or volume, such as a room, a workshop, a factory, a plant, a site and the like, and its associated information technology, IT, systems. Each realm may be operated under the responsibility and control of a respective stakeholder of the respective realm. That is, asset tracking devices, IT systems, and the like disposed in a given realm may all be owned and operated under the responsibility of a same stakeholder of the given realm. The asset is passed along between a plurality of the realms. During the time in which the asset is located within a given realm, it may be handled, processed and the like under the responsibility and control of the stakeholder of the given realm.

Limited trust between the plurality of realms may refer to limited trust between the respective stakeholders. Limited trust may mean the absence of mutual access, inconsistencies and/or lack of synchronization between the IT systems, asset tracking devices, and the like, of the respective realms. Limited trust may also refer to the fact that asset information received from a transmitting realm, via a gateway or interface between the transmitting realm and a receiving realm, may be considered to be untrustworthy in the receiving realm.

Examples for an asset-based industrial process involving the asset passing between a plurality of realms include the production, assembly, shipping, delivering, use, lending, collecting, disposing of the asset, reuse, remanufacturing or recycling of the asset or parts of the asset in a local or global supply chain involving a plurality of stakeholders such as supplier, OEM, repair shop operator, disposal facility operator, remanufacturing or recycling operator, logistics operator, and the like.

That is, an "asset-based industrial process" may refer to a business process, an enterprise process, and any kind of process that involves one or more assets passing between a plurality of realms.

In particular, an "asset-based industrial process" may be a process that is suitable for the application of supply chain management, SCM, and asset tracking, AT, technology.

The distributed database system may include a plurality of interconnected node devices distributed over one or more of the plurality of realms and/or outside thereof.

The ledger may refer to a sequence of confirmed transactional records that are stored in the digital database system.

More particularly, a copy of the entire ledger may be stored on each of the node devices of the distributed database system. The plurality of node devices may operate in accordance with a consensus-based protocol to ensure that each of the plurality of node devices stores an identical copy of the ledger.

"Consensus-based" may refer to the fact that the ledger may be immutable, i.e. it may be impossible to change the ledger without the change being detected, unless a consensus on the change is achieved between at least a majority of the node devices.

The distributed database system may be byzantine fault tolerant, BFT. More particularly, the distributed database system may be a blockchain or employ blockchain technology. Still more particularly, the distributed database system may be a blockchain implementing hyperledger technology.

It is noted herein that the ledger being consensus-based may not necessarily mean that each of the interconnected node device stores an identical copy of the ledger at all times. However, the consensus protocol may ensure that a divergence between the copies of the ledger of the respective node devices may be reliably detected and flagged so as to draw a stakeholder's attention to any potential data integrity issue.

A respective asset tracking device may be configured to acquire the asset attribute value of the asset when, during the asset-based industrial process, the asset is in proximity to the corresponding asset tracking device.

The asset attribute value may be indicative of an attribute of the asset itself and/or may refer to an attribute of a processing or handling step that is performed, as part of the industrial process, with the asset, on the asset or using the asset.

The processing and/or handling step may include steps such as machining, assembling, completing, packaging, shipping, delivering, using, repairing the asset, enforcing digital rights management on the asset, and the like.

An asset attribute may for example comprise at least one of a condition, a location, an ownership, a date when a specific processing and/or handling step has been performed, and the like.

The asset attribute value may be acquired by scanning the asset and/or may be acquired by receiving asset attribute value data from machinery, a control device and/or a human interface operated by an operator handling the asset.

The asset lifetime handler device may be implemented in hardware and/or in software.

For example, the asset lifetime handler device may be implemented as a software layer hosted in one or more cloud services. Alternatively and/or in addition thereto, at least parts of the asset lifetime handler device may be implemented as chaincode hosted on the distributed database system.

The asset lifetime handler device may be disposed in one of the plurality of realms and may be accessible, via network or the like, to entities disposed in the other of the plurality of realms.

Alternatively, a respective asset lifetime handler device portion may be disposed in each of the plurality of realms. In particular, there may be no direct communication between the asset lifetime handler device portions of the plurality of realms. More particularly, communication with regards to the asset and/or its attribute values between the plurality of realms may be restricted to (may be implemented exclusively by) the respective asset lifetime handler device portion of each realm reading to and writing from the ledger of the distributed database system.

The respective asset lifetime handler device may provide an interface, such as a human-machine interface, HMI, or an application programming interface, API, the interface offering functionality for registering attribute values in the ALP and/or retrieving the attribute values and/or a history thereof from the ALP.

A "history" of acquired asset attribute values may refer to any aggregation of data that is indicative of the latest (current, present) asset attribute values as well as of previously acquired (historical) asset attribute values for a respective same asset attribute. The respective current and/or historical asset attributes included in the history may originate from the plurality of realms through which the asset has passed during its lifecycle. The history may be immutable, i.e., it may be difficult, not viable and/or impossible to alter, change or falsify the previously acquired asset attribute values included in the history.

The term "ALP" may be used to refer to a coherent or distributed data record indicative of the history of the asset attribute values that have been acquired, over time, of the asset. An instance, or copy, of the ALP may be stored, at least in part, in the ledger of the distributed database system.

The asset lifetime handler device may be configured to make the ALP available to operating entities of the respective realm that are involved in the asset-based industrial process and/or to other interested and allowed parties that may have a legitimate interest in analyzing or governing the data of the ALP and/or the asset itself.
According to an embodiment, the asset attribute values included in the ALP include at least a mandatory set of generalized core asset attribute values, the mandatory set of generalized core asset attribute values being indicative of at least a condition, a location, and an ownership of the asset.

In other words, the asset tracking system may be configured to ensure and enforce that each ALP includes at least the mandatory set of generalized core asset attribute values.

The condition, location, and ownership may be attributes that are applicable to any kind of asset.

It may therefore be possible to overcome data compatibility and data inconsistency issues between the plurality of realms. Also, it may be possible to use the asset-tracking system for arbitrary assets.

According to a further embodiment, the ALP is maintained in the ledger of the distributed database system as a number of transactional records each associated with a unique identifier of the asset.

A number may refer to a number of one or more.

More particularly, upon each acquisition of an asset attribute value of the asset, a corresponding transactional record indicative of the acquired asset attribute value, or a change thereof, may be recorded in the ledger of the distributed database system. Along with the acquired asset attribute value or change thereof, a respective transactional record may further include a timestamp, an identifier of a stakeholder, realm, operating entity, asset tracking device and/or other party that has acquired the asset value, and the like.

That is, transactional properties of the asset-based industrial process, wherein each transaction corresponds to a change of an asset attribute value, may be mapped to corresponding transactional records of the ledger of the distributed database, wherein each transactional record corresponds to an update of the ALP.

That is, secure and immutable storage of the ALP may be achieved in an efficient manner.

According to a further embodiment, at least one of the number of transactional records of the ALP is a smart contract transaction.

A smart contract transaction may be a transactional record that includes executable code, the executable code being executed by the distributed database system under certain conditions related to the ledger.

By enabling the ALP to include a smart contract transaction, control logic for controlling the handling of the asset and the like may be embedded in the ALP of the asset.

According to a further embodiment, the distributed database system includes a plurality of node devices, and more than one of the realms each include at least one of the plurality of node devices.

By distributing the plurality of node devices of the consensus-based distributed database system over at least part of the plurality of realms, trust between the plurality of realms and trust in the asset tracking system may be increased.

According to a further embodiment, the asset lifetime handler device of the asset tracking system includes a programming interface means configured to receive instruction data and to respond to the received instruction data by performing at least one of: creating, editing and/or invalidating the ALP of the asset; registering a subscription for push notifications about a change of the ALP; transmitting, as response data, a copy of the ALP and/or a portion thereof; storing a file included in the instruction data, the file being related to the asset; and/or retrieving and transmitting, as response data, the file being related to the asset.

It is noted that a "file being related to the asset" may also be referred to as an "asset-related file" hereinbelow.

The programming interface means may be a HTTPS API, a REST API, and the like. The programming interface means maybe be reachable from the plurality of realms via network communications, such as TCP/IP communications and the like.

That is, the asset lifetime handler device may offer feature-rich and automated services for the creation, maintenance, handling and deletion of an intra-realm, blockchain-based, asset lifetime passport, ALP. Via the programming interface means, the services provided by the asset lifetime handler device may be easily accessed, programmed, and/or used by automated systems, such as ERP systems, IT systems and the like of the various realms.

Particularly, "registering a push notification" may refer to the programming interface means being configured to record information about a counterparty device that has transmitted the instruction data indicating a wish to be notified about a change of the ALP or a certain portion thereof, and to ensure that the counterparty device is notified when the ALP or the certain portion thereof is changed.

Preferably, the programming interface means may be configured to record said information in the distributed database system and to use smart contract functionality or the like of the distributed data base system to implement the push notification functionality.

Herein, "notifying" may include transmitting a message to the counterparty device. Further, "push notification" may refer to the fact that the counterparty device may not need to wait for and/or poll for changes of the ALP. Rather, the counterparty device may be idle or may proceed with any other kind of proceeding until it is interrupted by a push notification transmitted to it from the asset tracking system.

That is, the asset tracking system may be integrated into a control scheme of the industrial process and may, in particular, act as a source of push notifications about changes happening in the ALP (and hence, of changes or transactions in relation to the asset itself).

According to a further embodiment, the asset lifetime handler device further includes: a repository means configured to store a number of asset class descriptors, each asset class descriptor including a number of asset attribute descriptors; and a template feeder means configured to, when responding to receiving instruction data specifying one of the number of asset class descriptors, create the ALP for the asset in the ledger of the distributed database system based on the specified asset class descriptor.

Herein, a respective asset attribute descriptor may be data indicative of a respective asset attribute. An asset class descriptor may be a record of asset attribute descriptors. Upon creating the ALP based on the asset class descriptor, the template feeder means may create the ALP so as to include asset attributes that correspond to the asset attribute descriptors included in the asset class descriptor. That is, an asset class descriptor may be a template that can be used for template-based creation of a number of ALPs having the same configuration, i.e. the same set of asset attributes.

In particular, the programming interface means may be further configured to perform, in response to receiving corresponding instruction data, one of creating, editing and/or deleting of one or more of the asset attribute descriptors.

That is, for example an administrative user of the asset lifetime handler device may access to programming interface means to create a set of asset class descriptors that corresponds to the classes of assets that are to be tracked by the asset tracking system in the industrial process.

A standard user may later access the programming interface to create an ALP based on one of the previously programmed asset class descriptors each time a corresponding asset enters the industrial process.

According to a further embodiment, the asset lifetime handler device further includes an asset transaction layer, ATL, means configured to update the ALP maintained in the ledger of the distributed database system when a change is detected in any of the one or more acquired asset attribute values.

The ATL means may be embodied in software or hardware. The ATL means may be arranged and configured as an interface between the asset tracking devices and the distributed database system. The ATL means may advantageously ensure that a change in an asset attribute value is tracked in the distributed database system with a corresponding transactional record.

More particularly, a transactional record may be added to the ledger of the distributed database only if an asset tracking device acquires at least one attribute value that is different from an attribute value previously acquired by the same, or a different, asset tracking device for the same attribute. On the other hand, if all acquired attribute values are the same as the previously acquired attribute values, no transactional record may be added to the ledger of the distributed database.

Thereby, an amount of storage space required and a transactional load of the distributed database system may be reduced.

Alternatively, a transactional record may also be added to the ledger of the distributed database in a case where none of the acquired attribute values are changed, for confirmation or validation purposes or the like.

According to a further embodiment, the ATL means is further configured to generate a push notification when an asset-based event is observed in the ALP that is maintained in the ledger of the distributed database system.

Examples for an asset-based event include, in particular, a change of the ALP. Further, an asset-based event may include a user-definable (programmable) condition defined in terms of the asset attribute values included in the ALP. Merely as an example, an asset-based event may be a condition that, if met by the asset attribute values, is indicative of the fact that the asset has been delivered to a certain location, has been machined to a certain degree, is ready for pickup at a certain location, and the like.

That is, the ATL means may be arranged and configured as an interface between the distributed database system and a number of counterparty devices that are subscribed to push notifications. To this end, the ATL means may monitor the contents of the ledger and generate a push notification whenever the asset-based event is observed in the ALP. Alternatively, at least part of the ATL means may be embodied as a smart contract transaction stored in the ledger of the distributed database system, and may be configured to be executed by the distributed system whenever the asset-based event occurs.

In this way, counterparty devices arranged in the plurality realms may be efficiently and reliably notified of asset-based events occurring during the industrial process.

According to a further embodiment, the asset lifetime handler device further comprises a document serving means configured to: receive instruction data including a file related to the asset; store the received asset-related file for later retrieval; generate an asset attribute value including a link to the asset-related file and a hash value of the asset-related file; and transmit, as response data, the generated asset attribute value.

A counterparty device from the which the document serving means receives the instruction data and to which the document serving means transmits the response data may be, for example, one of the asset tracking devices.

The document serving means advantageously enables larger amounts of asset-related data, i.e. an asset-related file, which may be an instruction manual, a certificate document, a picture and the like, to be referenced in the ALP as a link and hash value. Thereby, the amount of data stored in the ALP and the corresponding load of the distributed database system may be reduced. At the same time, by storing a hash value along with the link the ALP, trust in the contents of the asset-related file may be increased. That is, it may be ensured that any later alteration of the asset-related file stored in the document serving means does not go unnoticed.

More particularly, the document serving means may be embodied using one or more of a server computer, a network attached storage, a cloud service and the like.

According to a further embodiment, a control program adapted to control the asset-based industrial process in the plurality of realms and/or at least part of the ATL means is implemented as a number of smart contract transactions in the ledger of the distributed database system.

The control program may, in particular, be adapted to control when and under which conditions which steps are to be performed with, on, or using the asset.

That is, smart contract or chaincode execution functionality of the distributed database system may advantageously be used to implement the control of the asset-based industrial process. In this way, any step performed with, on or using the asset may be performed based on a consensus between the plurality of realms and may be tracked in the ledger of the distributed database system in a traceable manner.

According to a further embodiment, the asset lifetime handler device is configured to receive the instruction data from and/or to transmit the response data and/or the push notifications to a respective one of a number of operating entities, each operating entity being an entity that is involved in controlling the industrial process, is located in one of the plurality of realms, and is one of a human operator, an artificial intelligence apparatus, a robotic system, a computing device, an industrial controller, an enterprise resource planning system, one of the asset tracking devices, the asset.

That is, the proposed asset-tracking system may advantageously be interconnected with operating entities of the asset-based industrial process, enabling smart automatization, traceability and added trust between the plurality of realms as to the asset attribute values that are being tracked in the ALP.

According to a further embodiment, the distributed database system is communicatively connected to the asset lifetime handler device, but is not communicatively connected to and/or is safeguarded against communications from the number of operating entities; and the asset lifetime handler device is communicatively connected to the number of operating entities in the plurality of realms.

In other words, the asset lifetime handler device may be interposed between the distributed database system and the plurality of realms such that interaction with the blockchain happens exclusively via the asset lifetime handler device.

In this way, onboarding of a new realm and/or a new stakeholder is simplified by obviating the requirement to connect a new realm directly to the distributed database system. Such onboarding may advantageously be achieved simply by connecting, and granting access for, the new realm to the asset lifetime handler device.

According to a further embodiment, the asset lifetime handler device includes an access control means configured to perform an identity-based multi-level read/write access control on received instruction data and transmitted response data.

That is, for example, the access control means may ask an operating entity connecting to the programming interface to authenticate itself. Based on the authentication provided, the access control means may authorize the operating entity's use of certain functionality of the programming interface means and disallow use of other functionality of the programming interface.

Merely as an example, an operating entity that has provided administrator authentication may get authorized to create, edit and delete any of an asset class descriptor and an ALP. However, an operating entity that has provided user authentication may be authorized to use an asset class descriptor solely for creating an ALP, and may be disallowed to create or edit an asset class descriptor.

In the above, the respective entity, device and/or means may be implemented in hardware and/or in software. If said entity, device and/or means is implemented in hardware, it may be embodied as a hardware device, e.g. as a computer or as a processor or as a part of a system, e.g. a computer system. If said entity is implemented in software it may be embodied as a computer program product, as a function, as a routine, as a program code, as a software layer or as an executable object.

Any embodiment of the first aspect may be combined with any embodiment of the first aspect to obtain another embodiment of the first aspect.

According to another aspect, there is provided a method for tracking an asset in an asset-based industrial process involving the asset passing between a plurality of realms, wherein there is limited mutual trust between the plurality of realms. The method comprises: hosting a consensus-based ledger of transactional records on a distributed database system; acquiring, over time by a respective one a plurality of asset tracking devices, one or more asset attribute values of the asset, wherein each of the realms includes at least one of the plurality of asset tracking devices; and maintaining, in the ledger of the distributed database system, based on the asset attribute values respectively acquired over time by the acquiring step, an asset lifetime passport, ALP, the ALP constituting a digital representation of a history of the acquired asset attribute values of the asset.

The embodiments and features described with reference to the asset tracking system of the present invention apply mutatis mutandis to the asset tracking method of the present invention.

According to a further aspect, the invention relates to a computer program product comprising a program code for executing the above-described method for tracking an asset when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows an asset tracking system according to a first exemplary embodiment;
- Fig. 2: shows an asset tracking method according to the first exemplary embodiment;
- Fig. 3: shows a block diagram of an asset lifetime handler device according to a further development of the first embodiment;
- Fig. 4: schematically visualizes operation of a template feeder means according to the further development of the first embodiment;
- Fig. 5: shows an asset tracking system according to a second embodiment; and
- Fig. 6: visualizes data flows in the asset tracking system according to the second embodiment.

In the Figures, like reference numerals designate like or functionally equivalent elements, unless otherwise indicated.

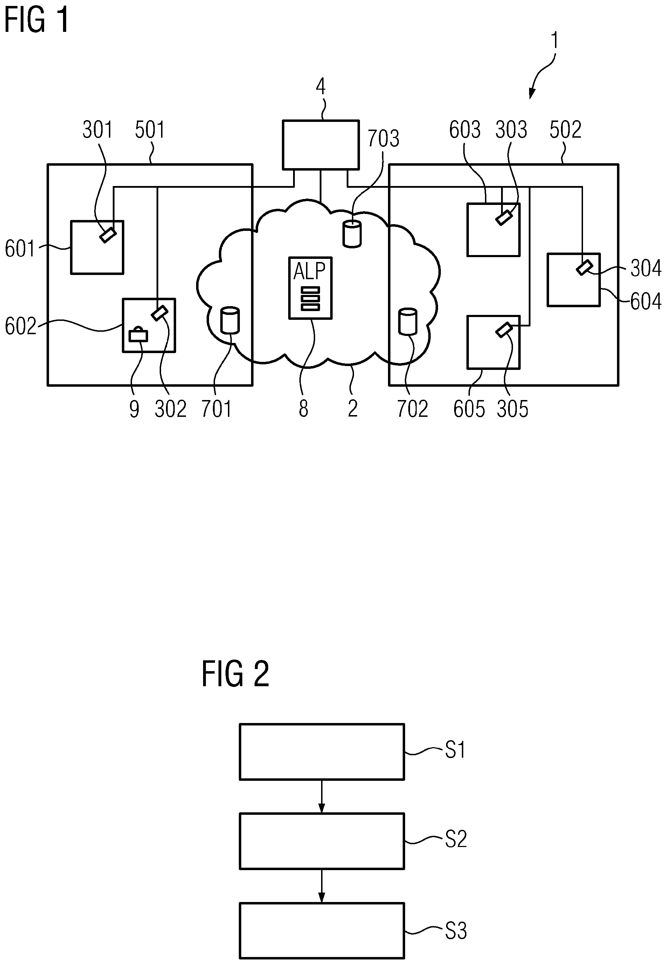

Fig. 1 shows an asset tracking system 1 according to a first exemplary embodiment, and Fig.2 shows a corresponding asset tracking method. Reference will be made to Fig. 1 and Fig. 2.

The asset tracking system 1 shown in Fig. 1 comprises the distributed database system 2, a plurality of asset tracking devices 301-305, and an asset lifetime handler device 4.

The asset tracking devices 301-305 are distributed over a first realm 501 and a second realm 502. That is, each of the realms 501, 502 includes at least one of the asset tracking devices 301-305.

For example, each of the realms 501, 502 includes a number of sites 601-605, and each of the sites 601-605 includes a respective one of the asset tracking devices 301-305.

Herein, a respective site 601-605 may be, for example, a workshop, a factory hall, a logistics center, a delivery vehicle, and the like.

Herein, a respective realm 501, 502 may be, in particular, an area which is owned and controlled by a respective stakeholder, such as an organizational unit, a company and the like. That is, for example, sites 601 and 602 are owned by and belong to a first stakeholder, and sites 603, 604, 605 are owned by and belong to a second stakeholder.

More particularly, the first stakeholder who owns and operates sites 601 and 602 of the first realm 501 may not have control over, and therefore may only have limited trust in the second realm 502. More particularly, the first stakeholder may have limited trust in data communications received from the second realm 502. Likewise, the stakeholder of the second realm 502 may have limited trust in the first realm 501.

The distributed database system 2 is distributed over (constituted by) a plurality of node devices 701, 702, 703.

It is noted that in particular, the asset lifetime handler device 4 may be communicatively coupled, on the one hand, to the distributed database system 2, and, on the other hand, to each of the plurality of asset tracking devices 301-305. Said communicative coupling may be a direct link as shown in Fig. 1, or an indirect coupling via any kind of intermediate system. For example, asset tracking devices 301 and 302 of the first realm 501 may be connected to an ERP system (not shown in Fig. 1) of the first realm 501, and the asset lifetime handler device 5 may be connected to the ERP system of the first realm.

The asset tracking system 1 shown in Fig. 1 provides beneficial advantages when an industrial process is being carried out that involves an asset 9 passing between the plurality of realms 501 to 502.

Merely as one possible example, the asset 9 may be a specialized toolkit, such as a toolbox including a number of repair instruments, that is used for repairing a gas turbine (not shown). The asset 9 may also be referred to as "asset 9" for brevity, and/or, by way of a non-limiting example, as "toolbox asset 9". Further, for example, realm 501 may include the premises and IT network of a stakeholder whose business is providing operating, maintenance and repair services for gas turbines. Realm 502 may include the premises and IT network of a stakeholder whose business is to operate a gas turbine (not shown) installed at a gas turbine installation site 604. The industrial process may involve the toolbox asset 9 being taken from a warehouse site 601 of the first realm 501 to a pickup site 602 of the first realm 501, which is operated by the first stakeholder. From there, it may be picked up by a logistics operator (third stakeholder) and be delivered to a delivery site 603 of the second realm 502 operated by the second stakeholder. From there, the asset may be passed on to the installation site 604 of the gas turbine and may be used for repair of the gas turbine. During the repair, some of the repair instruments included in the toolbox asset 9 may deteriorate, break or become gradually depleted, which has a certain effect on the condition of the toolbox asset 9. After that, the toolbox asset 9 may be passed back to a pickup site 605 in the second realm 502, and may be delivered back to the first realm 501 to storage in the warehouse site 601. In such an industrial process, the stakeholder of the first realm 501 may be interested in accurately tracking asset attribute values such as the whereabouts and condition (such as number of uses, usage hours, completeness of instruments included in the toolbox, and the like) of the asset 9, for maintenance and billing purposes and the like. Likewise, the stakeholder of the second realm 502 may be interested in receiving the asset 9 together with trustworthy information about its condition upon delivery to the second realm 502. However, there is only limited trust between the first realm 501 and the second realm 502.

To overcome this issue, in step S1 of the asset tracking method of Fig. 2, a consensus-based ledger of transactional records (not shown in Fig. 1) is hosted on the distributed database system 2. That is, the distributed database system may be configured to embody a blockchain platform or the like.

In step S2, over time, whenever the asset 9 passes by one of the asset tracking devices 301-305, which are arranged at the respective sites 601-605 of the respective realms 501, 502, the respective asset tracking device 301-308 acquires one or more asset attribute values of the asset 9, such as its identity, location, position, condition, and the like.

The acquired attribute asset values may be communicated - directly and/or indirectly via an ERP or other IT system (not shown) of the respective realms 501, 502 - to the asset lifetime handler device 4.

In step S3, the asset lifetime handler device 4 maintains an asset lifetime passport, ALP, 8 in the ledger of the distributed database system 2, based on the asset attribute values acquired by the asset tracking devices 301-305. The ALP 8 constitutes a digital representation of a history of the asset attribute values of the asset 9 that have been acquired by the asset tracking devices 301-305. More particularly, "a digital representation of a history of the asset attribute values" may mean that the digital representation may include and/or allow to determine the current asset attribute values as well as their historical values and/or their historical changes.

That is, in particular, an ERP system or other IT system (not shown in Fig. 1) of a respective realm 501, 502, may use the asset lifetime handler device 4 to acquire, or read data from, the ALP 8, said data being indicative of the latest acquired asset attribute values of the asset 9, as well as of previously acquired asset attribute values, and or changes or transactions thereof.

More particularly, a consensus protocol implemented by the distributed database system 2 may safeguard the ALP 8 against fraudulent manipulations and may ensure immutability of the history of the asset attribute values of the asset 9 represented by the ALP 8.

Therefore, advantageously, although there is limited trust between realms 501, 502, each of the realms may trust in the correctness of the history of asset attribute values represented by the ALP 8.

In a preferred variant shown in Fig. 1, node device 701 is included in the first realm 501, and node device 702 is included in the second realm 502. Node device 703 is provided at a location that is not part of any of the first realm 501 and the second realm 502. That is, each of the realms 501, 502 includes at least one of the plurality of node devices 701-703. Thereby, mutual trust between the realms 501, 502 with regards to the correctness of the ALP 8 may be further improved.

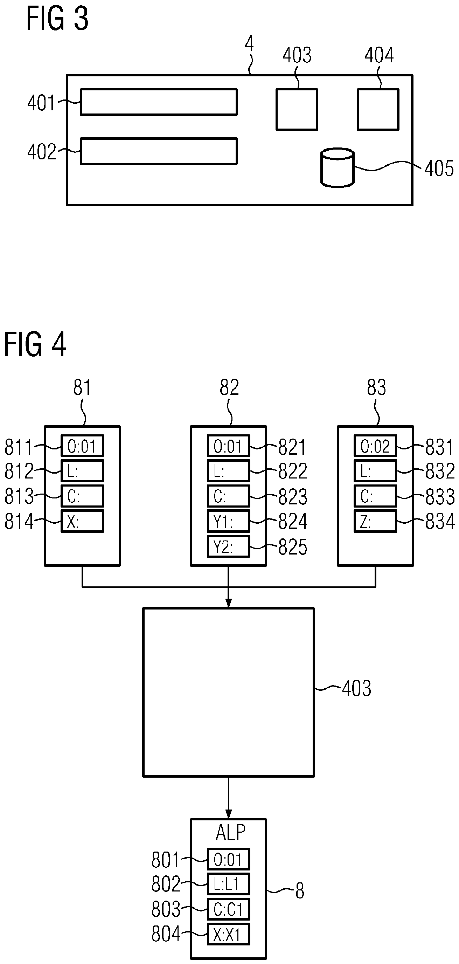

Fig. 3 shows a block diagram of the asset lifetime handler device 4 according to a further development of the first embodiment. Reference will be made to Fig. 3 and Fig. 1.

The asset lifetime handler device 4 includes a programming interface means 401, an asset transaction layer, ATL, means 402, a template feeder means 403, a repository means 404 and a document serving means 405.

The programming interface means 401 may provide for easy and automated access to and programmability of the features of the asset tracking system 1.

More specifically, the programming interface means 401 may receive instruction data from an operating entity that is involved, in some way or other, in handling or participating in the industrial process, such as from the asset tracking devices 301-305, from a unit of a respective ERP or other IT system (not shown) of the realms 501, 502, from the asset 9 itself, etc.

In response to and dependent on the received instruction data, the programming interface means 401 may cause the asset lifetime handler device 4 to perform operations such as: create the ALP 8 for a new asset 9 that is introduced into the industrial process, edit and/or add information to the ALP 8, delete the ALP 8 upon removal of the asset 9 from the industrial process, subscribe the operating entity to push notifications about a change of the ALP, transmit a copy of the ALP 8 to the operating entity, store and retrieve, in/from the document serving means 405, an asset-related file such as an instruction manual or the like.

The asset transaction layer device 402 may advantageously ensure that transactional records constituting the ledger of the distributed accurately map transactions, i.e. changes of, the asset attribute values of the asset 9 acquired by the asset transaction devices 301-305.

More particularly, when the asset transaction layer means 402 detects a change in any of the one or more acquired asset attribute values, the asset transaction layer means 402 may post a corresponding transactional record to the ledger of the distributed database system 2. The transactional record may be associated with an identifier of the asset 9. The identifier may be one of the asset attribute values that is acquired from the asset 9, and may, in particular be static, i.e. may be the same upon each acquisition.

In other words, the asset transaction layer means 402 of the asset lifetime handler device 4 may maintain the ALP 8 in the ledger of the distributed database system 2 as a number of transactional records each associated with a same, i.e. unique, identifier of the asset 9.

Further, preferably, in order to implement subscriptions to push notifications about a change of the ALP 8 of the asset 9, the programming interface means 4 may cause the asset transaction layer means 402 to post a smart contract transaction to the ledger of the distributed database system 2. The smart contract transaction may, for example, comprise code configured to be executed, for example, each time when a transactional record associated with the identifier of the asset 9 is posted to the ledger of the distributed database system 2. The smart contract transaction may also be associated with the identifier of the asset 9, and may therefore also be included in the ALP 8. Then, when a change in the ALP 8 occurs, the smart contract transaction of the ALP 8 may cause a notification to be sent to the asset transaction layer means 402, and the asset transaction layer means 402 may notify the subscribed operating entity of the change of the ALP 8.

Fig. 4 schematically visualizes operation of a template feeder means according to the further development of the first embodiment. Reference will be made to Fig. 1, Fig. 3 and Fig. 4.

A number of asset class descriptors 81, 82, 83 are stored in the repository means 404 of the asset lifetime handler device 4. Each asset class descriptor 81, 82, 83 describes a respective asset class. Herein, an asset class may refer to a description or representation applicable to a plurality of assets having the same or similar properties. For example, a first asset class described by the asset class descriptor 81 may be toolboxes for the repair of gas turbines. A second asset class described by the asset class descriptor 81 may be rental vehicles. A third asset class described by the asset class descriptor 83 may be spare parts. Further asset classes described by further (not shown) asset class descriptors may be parts of the gas turbine, such as a blade, a vane, or the like.

Each asset class descriptor 81, 82, 83 includes a number of asset attribute descriptors 811-814, 821-825, 831-834. Each asset attribute descriptor 811-834 is indicative of an asset attribute that is of relevance to the corresponding asset class.

It is noted that each of the asset class descriptors 81, 82, 83 contains at least an asset class descriptor 811, 821, 831 indicative of an asset owner; an asset class descriptor 812, 822, 832 indicative of an asset location; and an asset class descriptor 813, 823, 833 indicative of an asset condition. Herein, it is considered that the asset attributes: location, condition and owner, constitute an immutable set of generalized core asset attributes which are of relevance to any stakeholder that is concerned with handling any kind of asset 9.

It is noted that, for example, the asset attributed descriptors 811, 821, 831 that are indicative of an asset owner are pre-filled with corresponding default asset attribute values "01", "02", respectively. On the other hand, asset attribute descriptors 812-834 are indicative of an asset attribute, but are empty, i.e. are not pre-prefilled with a corresponding default asset attribute value.

When the programming interface receives instruction data which includes an instruction to create an ALP 8 based on an indicated one of the asset class descriptors 81-83, the template feeder means 403 creates, or causes creation of, the ALP 8 based on the indicated asset lifetime descriptor 81, 82, 83. The asset lifetime descriptor 81 in the example shown has been created based on the indicated asset class descriptor 81 and includes asset attribute value records 801, 802, 803, 804 which correspond to the asset attribute descriptors 811-814.

Asset attribute value record 801 is indicative of the asset attribute "owner" and includes the asset value "01" for the owner, which is the predefined asset attribute value for the given asset attribute and has been copied from the asset attribute descriptor 811 of the asset class descriptor 81.

Asset attribute value records 802, 803 are indicative of the generalized core asset attributes "location" and "condition". Asset attribute value record 804 is indicative of the asset-specific asset attribute "X", which is of specific relevance only for assets belonging to the asset class corresponding to asset class descriptor 81.

The asset attribute values "L1", "C1" and "XI" of the asset attribute value records 802, 803, 804 may be set based on the corresponding asset attribute values being included in the instruction data for creating the ALP 8, and/or may be acquired, upon a first acquisition of the asset 9 to which the ALP 8 corresponds, by one of the asset tracking devices 301-305.

Further, preferably, in response to and dependent on received instruction data, the programming interface means 401 may cause the asset lifetime handler device 4 to perform operations such as: creating, modifying and editing one or more asset class descriptors 81-83 stored in the repository means 404.

Herein, the programming interface means 401 may be configured to ensure that any asset class descriptor 81-83 that is stored in the repository means 404 in response to said creating, modifying and/or editing, includes at least asset attribute descriptors 811, 821, 831, 812, 822, 832, 813, 823, 833 corresponding to the set of generalized core asset attributes. The programming interface 401 may add the generalized core asset attribute descriptors 811-833 to any asset class descriptors 81, 82, 83 upon its creation, and/or may refuse to create, modify and/or edit an asset class descriptor 81, 82, 83 which lacks at least one of the set of generalized core asset attribute descriptors 811-833.

In this way, it may be ensured that any asset lifetime passport 8 created by the template feeder means 403 includes at least a mandatory set of generalized core asset attribute values 801-803 that are indicative, respectively, of a condition, a location and an owner of the corresponding asset 9.

The repository means 404 and the template feeder means 403 may thus ensure interoperability and compatibility of the asset tracking system 1 and may improve its usefulness for industrial processes that involve the asset 9 being passed along a plurality of realms 501, 502 which are operated by different stakeholders, use different IT systems etc.

The mandatory set of generalized core asset attributes may also be regarded as an anchoring metric of the asset tracking system 1.

Attention is now drawn to the fact that certain asset attributes may not refer to simple values, but may rather be associated with digital files, such as a digital representation of an instruction manual or a certification document of the asset 9, and the like. These digital files may be large in size and it may be desirable to offload such digital files from the distributed database 2.

Therefore, further and preferably, the asset lifetime handler device 4 may comprise the document serving means 405. Let us assume that an operator of an asset tracking device 301, 302 of the first realm 501 wishes to provide, along with the ALP 8, a large asset-related file, such as an instruction manual, a picture or a certification document.

The asset tracking device 301, 302 may decide to transmit instruction data including the asset-related file to the document serving means 405 of the asset lifetime handler device 4. The document serving means 405 may store the received asset-related file for later retrieval. Further, the document serving means 405 may generate a link, such as a HTTPS link and the like, to the asset-related file and may calculate a hash value of the asset-related file, and may generate an asset attribute value including the link and the hash value. The generated asset attribute value including the link and the hash value may be transmitted back to the asset tracking device 301-305 for acquisition, and/or may be transmitted directly to the asset transaction layer 402 for inclusion into the ALP 8.

An operator of an asset-tracking device 303-305 of the second realm 502 may access the ALP 8 of the asset 9, may obtain the link and the hash value from the ALP 8, may proceed to retrieve the asset-related file using the link obtained from the ALP 8, and may proceed to verify the contents of the retrieved asset-related file using the hash value obtained from the ALP 8.

Herein, the hash value may protect the asset-related file from tampering such that any tampering with the asset-related file can be detected. Further, the consensus-based ledger of the distributed database system 2 may protect the link and hash value in the ALP 8 from being tampered with.

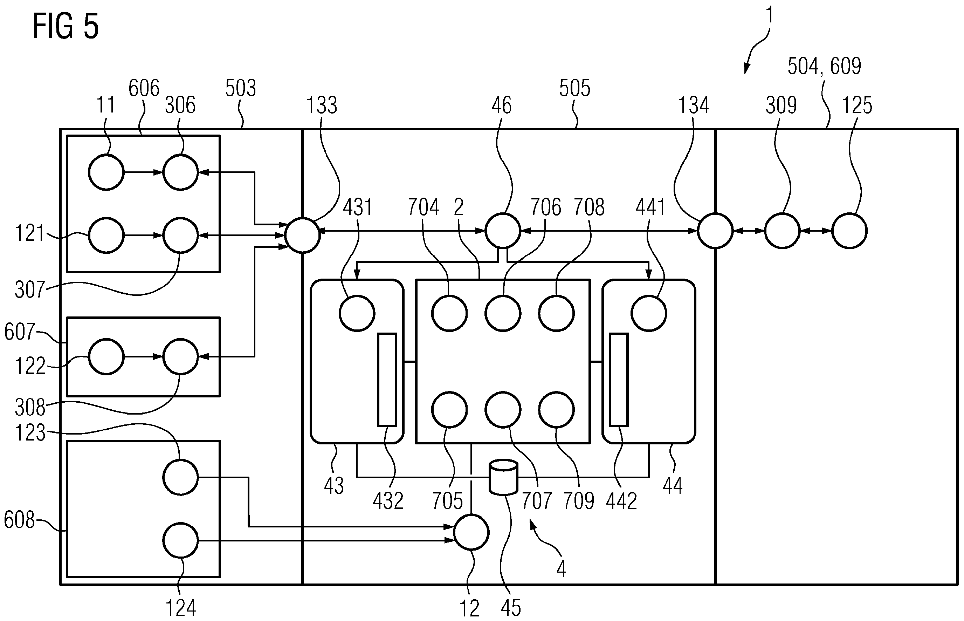

Fig. 5 illustrates an asset tracking system 1 according to a second embodiment.

The second embodiment is based on the first embodiment, and elements described with the same terminology and/or using the same reference numerals correspond to each other.

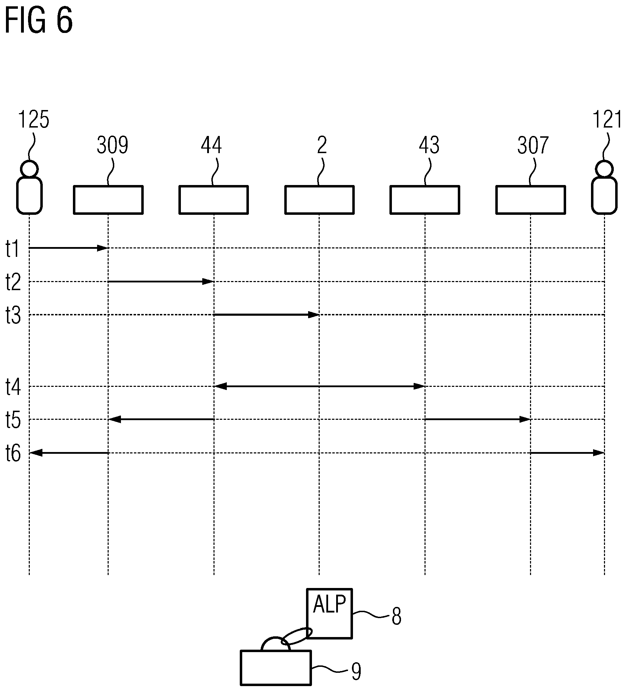

More specifically, Fig. 6 shows a vendor realm 503 owned and operated by a vendor, a logistics realm 504 owned and operated by a logistics operator, and a cloud 505.

The vendor realm 503 includes an office site 606, a construction site 607 and a development site 608. The logistics realm 502 is not subdivided into sites and/or may be regarded as a single global mobility site 609.

The cloud 505 includes network infrastructure which is owned and operated by a cloud operator who is neither the vendor nor the logistics operator. I.e., vendor realm 503, logistics realm 504 and cloud 505 each are owned and operated by different stakeholders.

It is noted that the cloud 505 may be a single cloud or may be embodied as a plurality of clouds. Each of the plurality of clouds may be operated by a different provider.

However, while an industrial process may involve an asset (9 in Fig. 1) being passed among the vendor realm 503 and the logistics realm 504, such an industrial process would reasonably not involve the asset (9 in Fig. 1) being passed to the cloud 505 and/or the premises of the cloud operator. Therefore, the cloud 505 will not be referred to as a "realm" in the sense of the appended claims.

The asset tracking system 1 of the second embodiment comprises a distributed database system 2, a plurality of asset tracking devices 306-309, and an asset lifetime handler device 4, which will be described in more detail below.

The office site 606 of the vendor realm 503 includes an ERP system 11, an EDI message transformer 306, an ALP dashboard 307 and a first operator 121, who may be a human operator or a robotic device.

The EDI message transformer 306 converts between Electronic Data Interchange, EDI, messages of the ERP system 11 and instruction data to be transmitted to and/or response data to be received from the asset lifetime handler device 4. In other words, among others, asset attribute values and the like, which are managed by the ERP system 11, may be exchanged between the ERP system 11 and the asset tracking system 11. Thus, the EDI message transformer 306 constitutes an example of an asset tracking device.

The ALP dashboard 307 may be displayed by a web browser running on a workstation computer (not shown) installed at the construction site 607. The ALP dashboard 307 may allow the first operator 121, who may be an asset owner or the like, to interact with the programming interface means 401 (Fig. 3) of the asset lifetime handler device 4. Such interaction may comprise acquiring asset attribute values from the asset owner 121 and entering them into the ALP 8 (Fig. 1, 3). Thus, the ALP dashboard 307 constitutes another example of an asset tracking device.

The construction site 607 includes an ALP app 308. The ALP app 308 may be executed to a mobile device (not shown), such as a smartphone or a tablet computer, and may be operated by a second operator 122, who may be a human or robotic site manager or the like. A camera, RFID sensor, NFC sensor, keyboard, touchpad or touch-sensitive display or the like of the mobile device may be used by the ALP app 308 to acquire asset attribute values and transmitting them to the asset lifetime handler device 4. Thus, the ALP app 308 constitutes another example of an asset tracking device.

The development site 608 may not be involved in the industrial process of passing the asset 9 (Fig. 1) from site 606, 607, 609 to site 606, 607, 609. However, human developers such as a vendor developer 123 and a cloud operator developer 124 may be located at the development site 607.

The EDI message transformer 306, ALP dashboard 307 and ALP app 308 are communicatively connected to a vendor edge services device 123, which may provide routing, firewalling, virus protection and similar services, and which may forward communications (data, instructions) passing between the first realm 503 and the cloud 505.

The logistics realm 504 (global mobility site 609) includes an ALP app 309 which may be operated by a human or robotic logistics clerk 125. The ALP app 309 corresponds to the ALP app 308 and a description thereof will not be repeated. The ALP app 309 constitutes another example of an asset tracking device.

The ALP app 309 is communicatively connected to a logistics edge services device 134. The logistics edge services device 134 which corresponds to the vendor edge services device 133, and a description thereof will not be repeated.

Components of the asset tracking system 1 other than the asset tracking devices 306-309 are provided in the cloud 505 and will be described next.

Specifically, the cloud 505 includes, as the distributed database system of the second embodiment, a hyperledger platform 2. The hyperledger platform 2 comprises various node devices 704-709 which take part in hosting a consensus-based ledger of transactional records on the hyperledger platform 2.

More specifically, the node devices 704-709 comprise a vendor peer device 704 and a vendor certificate authority 708, which - although being located in the cloud 505 - may be owned and operated by the vendor, who is the stakeholder of the vendor realm 503; a logistics peer device 705 and a logistic certificate authority 709, which may be owned and operated by the logistics operator, who is the stakeholder of the logistics realm 504, a command line interface device 706, which provides for command line interaction with the hyperledger platform for maintenance purposes and the like, and an orderer node 709, which assumes auxiliary tasks related to the ordering of transactional records to be posted to the consensus-based ledger of the hyperledger platform 2.

Further, the cloud 505 includes a distributed asset handler device 4. The distributed asset handler device 4 includes vendor integration services means 43, logistics integration services means 44, a document sever means 45 and an access control means 46, all of which are implemented in the cloud 505.

The vendor integration services means 43 is owned and operated by the vendor, who is the stakeholder of the vendor realm 503, and includes a vendor programming interface means 431 and a vendor ATL means 432. The logistics integration services means 44 is owned and operated by the logistics operator, who is the stakeholder of the logistics realm 504, and includes a logistics program interface means 441 and a logistics ATL means 442.

Herein, the vendor programming interface means 431 and the vendor ATL means 432 correspond the programming interface means 401 and the asset transaction layer means 402 of Fig. 3, respectively. However, the vendor programming interface means 431 and the vendor ATL means 432 may be adapted to adhere to conventions prevalent in the vendor realm 503, such as data and message interchange formats, APIs, design and layout, network protocols and the like that are used in the vendor realm 503. Likewise, the logistics programming interface means 441 and the logistics ATL means 442 may be adapted to adhere to conventions prevalent in the logistics realm 504.

The document serving means 45 of the second embodiment corresponds to the document serving means 405 (Fig. 3) of the first embodiment. The document serving means 45 may be implemented as a Cloudant database. It is noted that a Cloudant database is a distributed database; however, unlike the hyperledger platform 2, it does not host a consensus-based ledger of transactional records. That is, the Cloudant database 45 may be suitable for storing large amounts of large files, whereas the hyperledger platform 2 may be suitable for storing transactional records and may provide a higher level of trust, manipulation protection and traceability.

The access control means 46 is communicatively coupled between the vendor edge services device 133, the logistics edge services device 134, and the respective integration layer means 43 and 44. The access control means 46 routes incoming instruction data and outgoing response data between the vendor edge service device 133 and the vendor integration layer means 43. The access control means 46 also routes incoming instruction data and outgoing response data between the logistics edge service device 134 and the logistics integration layer means 44.

Further, the access control means 46 may be configured to perform an identity-based multi-level read/write access control on the incoming instruction data and the outgoing response data. That is, for example, the asset owner 121 may be granted full access to the vendor programming interface means 431 provided that instruction data transmitted by the ALP dashboard 307 operated by the asset owner 121 relates to an ALP 8 (Fig. 4) including an asset attribute value 801 (Fig. 4) indicating the vendor as the owner of the corresponding asset 9 (Fig. 1). Site manager 122 ,who is operating the ALP app 308, may be granted the right to view and modify certain ALPs (not shown) which relate to assets that the site manager 122 is expected to process as part of his or her duties, but may be disallowed to create new ALPs and/or to view and modify other ALPs that the site manager 122 is not expected to work with. Still further, the logistics clerk 125 operating the ALP app 309 may only be granted a limited view on a subset of certain asset attribute values 801-804 (Fig. 4) and may be denied any access to other asset attribute values 801-804 (Fig. 4) that the logistics clerk 125 is not expected to see and/or modify.

Privilege levels, identity data and the like, based on which the access control means 46 may perform authentication and authorization when performing said identity-based multi-level read/write access control, may be stored in the Cloudant DB 45 and/or in the hyperledger platform 2. More particularly, a respective ALP 8 (Fig. 4)) may include, as one of the asset attribute values 801-804 (Fig. 4), an access control list that is indicative of privilege levels of different operator 121, 122, 125 identities.

As has been noted above, a vendor developer 123 and a cloud operator developer 124 are located at the development site 608 of the vendor realm 503. Respective computing devices (not shown) used by developers 123 and 124 are connected to a development staging device 12 which may enable the developers to create and deploy code so as to update the vendor and logistics integration services means 43, 44 and/or a chaincode running on the hyperledger platform 2.

More particularly, the chaincode running on the hyperledger platform 2 may comprise code of a control program adapted to control the asset-based industrial process and/or code adapted to implement the asset transaction layer means 432, 442. That is, such code may be implemented as a number of smart contract transactions in the ledger of the hyperledger platform 2.

With regards to the configuration visualized in Fig. 5, the controlling of the asset-based industrial process that involves an asset 9 (Fig. 1) passing between a plurality of realms, such as the vendor realm 503 and the logistics realm 504, may involve the asset handler device 4 receiving instruction data from and transmitting response data to a number of operating entities such as the asset tracking devices 306-309, the operators 121-123, the ERP system 11, the asset 9 (Fig. 1), but also to other operating entities (not shown) that are suitable for influencing the handling the asset, such as artificial intelligence apparatuses, robotic systems, computing devices, industrial controllers and the like.

Fig. 6 visualizes data flows in the asset tracking system according to the second embodiment during a portion of the asset-based industrial process. The portion of the asset-based industrial process will now be described in more detail with reference to Fig. 5 and Fig. 6.

Specifically, the portion of the asset-based industrial process may involve an asset 9 being delivered, by the logistics clerk 125, to the site manager 122.

That is, at time t1, logistics clerk 125 accesses the ALP app 309 to update an asset attribute value of an asset 9 to reflect the state "delivered".

At time t2, a corresponding message is delivered from the mobile app 309, via the logistics edge service device 134 and the access control means 46, to the logistics integration services means 44, i.e., more specifically, to the logistics ATL means 442.

At time t3, the logistics ATL means 442 causes the "delivered" asset attribute value to be recorded in the ALP 8, thereby causing a change in the ALP 8.

It is noted that although the ATL 8 is shown as being "tied" to the asset 9 in Fig. 6, it is understood that the ATL 8 is actually stored as a number of transactional records in a ledger of the hyperledger platform 2 of Fig. 5, and said "tie" is achieved by said transactional records being associated with an identifier of the asset 9.

The change in the ALP 8 may trigger the execution of a smart contract (not shown), which may be included in the ALP 8 and/or may be part of the chaincode of the hyperledger platform 2.

It is noted that this is merely an example, and an execution of a smart contract may also be triggered, for example, based on arrival of the asset at specific geographical locations. For example, it is conceivable to cause the sending of a quotation based on an actual usage of an asset.

At time t4, said smart contract execution causes a confirmation notification to be sent to the logistics integration services means 44. At time t5, the confirmation notification is transmitted from the logistics integration service 44, via the logistics edge services device 134, to the ALP app 309. At time t6, the ALP app 309 notifies the logistics clerk 125 that the ALP 8 has been successfully updated.

Referring back to time t4, said smart contract also causes an update notification to be sent to the vendor integration services means 43. At time t5, the update notification is transmitted from the vendor integration services means 43, via the vendor edge services device 133, to the ALP dashboard 307. At time t6, the ALP dashboard 307 updates its display to notify the asset owner 121 that the logistics clerk 125 has indicated delivery of the asset 9.

Although not visualized in Fig. 6, site manager 122 also uses his or her ALP app 308 to confirm the delivery (reception) of the asset 9. Through message exchange in a manner similar to the one described above, said confirmation is recorded in the ALP 8 and is thereby made visible to the asset owner 121.

Although the present invention has been described in accordance with preferred embodiments, it is obvious for the person skilled in the art that modifications are possible in all embodiments.

In Fig. 1, each realm 501, 502 includes a plurality of sites 601-602, 603-605. However, a respective realm 501, 502 may also comprise (include, be) a respective single site 601, 603. Further, in Fig. 1, each site 601-605 includes exactly one corresponding asset-tracking device 301-305. However, a site 601-605 may also include more than one of the asset-tracking devices 301-305.

Fig. 1 shows a certain number and arrangement of node devices 701-703 of the distributed database system; however, there is no particular limitation as to the number of node devices 701-703, and there is no particular limitation as to where each of the node devices 701-703 is arranged. It is also conceivable that all node devices 701-703 are arranged in a same realm 501, 502, or that none of the node devices 701-703 is arranged in any of the realms 501, 502.

Fig. 1 shows a single asset lifetime handler device 4 that is arranged outside of any of the realms 501, 502. However, the asset lifetime handler device 4 may also be located in one of the realms 501, 502, and may be accessible via network to operating entities located in other of the realms 501, 502.

The document serving means 405, 45 and associated functionality constitute an optional feature that may also be omitted.

In the embodiments, an example was described wherein an asset was a toolbox for repairing a gas turbine. However, the proposed solution is applicable to the tracking of any type of physical asset as part of the supply chain management of any industrial, business or enterprise process.

Furthermore, the present solution is also applicable to the tracking of digital assets. For example, a 3D print part (digital file) may be delivered through many global locations or realms, wherein each realm is permitted to print the 3D print part only for a predetermined number of times. The number of remaining allowed prints for each realm may be stored as an asset attribute value in the ALP. Thus, the proposed asset tracking system may be used to enforce digital rights management of the digital asset.

In the embodiments, a smartphone running an ALP app and a web interface showing an ALP dashboard were described as specific examples for the asset tracking device. However, one or more of the asset tracking devices may be a respective fully automated asset tracking device configured to automatically acquire one or more asset attribute values of the asset when the asset is in proximity of the fully automated asset tracking device.

Advantages and features enabled by the proposed solution and its possible embodiments, only some of which have been described above, include, but are not limited to:

A global, company-wide treatment of all assets may be enabled.

A global view of asset attribute values of an asset may be provided only to those operating entities who are responsible for handling the asset.

It may be easy to onboard an additional stakeholder and its realm simply by providing access to the asset lifetime handler device 4 via the access control means 46.

The programming interface means 401, 431, 441 of the asset handler device 4, in conjunction with the template feeder means 403 and the repository means 404, may enable easy extension of the industrial process with new assets and new asset classes and may thus provide for flexibility and upgradability.

Any transactions pertaining to the asset 9, i.e. any changes of asset attribute values in its associated ALP 8, may be made transparent and may be secured against fraudulent manipulation throughout an entire lifecycle of the asset 9.

In particular, the asset attributed value history represented by the ALP 8 may be immutable.

The asset tracking system 1 may enable trusted message exchange between realms 501-504 having limited mutual trust via a distributed database system 2 using blockchain technology.

Any transaction pertaining to the asset 9, such as the asset 9 being handled, shipped, processed, used and the like, may be mapped to a corresponding transactional record of the ledger of the distributed database system 2 (of the ALP 8).

Apps, applications and system environments which are involved in controlling the asset-related industrial process may be easily added, updated and replaced by updating the chaincode executed by the hyperledger platform 2.

The asset attribute values histories acquired and recorded in corresponding ALPs 8 are made available in the ledger of the distributed database 2 and may be used for further analysis using Artificial Intelligence and Data Analytics. For example, pattern recognition may be used to increase asset utilization, optimize transport routes and/or gain information about an asset during its lifecycle.

Operators 121-125 located in the respective realms 503, 504 may be granted the possibility to develop new asset classes and to record them in the repository means 404 of the asset lifetime handler device 4 and to thereby perform upgrades on the asset-based industrial process independently of each other.

The asset lifetime handler device may provide for a layer of abstraction interposed between the blockchain-based distributed database system 2 and the various realms 501-504 and may therefore facilitate the integration of legacy systems.

The data made available in the ALPs 8 may be used to perform accurate billing, reducing loss, and/or securing smooth operation of the industrial process through timely provisioning of any required asset 9. Thereby, a utilization degree of the systems involved in the industrial process may be increased. Further, an availability of assets, such as working instruments and the like, may be optimized.

Yet further, an asset 9 may be a Smart Machine which may be triggered to perform certain actions based on notifications transmitted by smart contracts of the chaincode implemented on the hyperledger platform 2 as part of the various ALPs 8. For example, if one of the asset tracking devices 301-309 reports an asset 9 as being out of order, a smart contract implemented in the corresponding ALP 8 may trigger ordering of a replacement asset and/or ordering of repair services for the asset 9. Yet further, a smart contract implemented in the ALP 8 may deploy Predictive Analytics to trigger maintenance works to be performed on the asset 9 before the corresponding asset 9 goes out of order. Thereby, advantageously, outage times of the asset 9 may be minimized.

In addition, the present solution may be used to make historical data of an asset available across an entire SCM asset tracking value chain that involves a plurality of realms operated by different stakeholders, thereby enabling a combination of data analytics and predictions to adapt the industrial process to specific constraints and stakeholders in a flexible way.

Examples may include: A likelihood of a hazardous weather condition could result in an intermediate change of the logistic provider and or delivery routes in advance, wherein additional cost incurred may be transparently documented in the ALP.

A likelihood of a service team being on strike (harbor, airports, customs, logistic provider and the like) could result in a change of routes, transportation vehicles, nearly in real-time with according adjustments of a smart contract of the ALP.

## Claims

1. An asset tracking system (1) for tracking an asset (9) in an asset-based industrial process involving the asset (9) passing between a plurality of realms (501, 502), wherein there is limited mutual trust between the plurality of realms (501, 502), the asset tracking system (1) comprising:
a distributed database system (2) configured to host a consensus-based ledger of transactional records,
a plurality of asset tracking devices (301-305) each configured to acquire one or more asset attribute values of the asset (9), wherein each of the realms (501, 502) includes at least one of the plurality of asset tracking devices (301-305), and
an asset lifetime handler device (4) configured to maintain, in the ledger of the distributed database system (2), based on the asset attribute values respectively acquired over time by a respective one of the plurality of asset tracking devices (301-305), an asset lifetime passport, ALP (8), the ALP (8) constituting a digital representation of a history of the acquired asset attribute values of the asset (9) .

2. The asset tracking system of claim 1,
wherein the asset attribute values included in the ALP (8) include at least a mandatory set of generalized core asset attribute values, the mandatory set of generalized core asset attribute values being indicative of at least a condition, a location, and an ownership of the asset (9).

3. The asset tracking system of any of claims 1 - 2,
wherein the ALP (8) is maintained in the ledger of the distributed database system (2) as a number of transactional records each associated with a unique identifier of the asset (9) .

4. The asset tracking system of claim 3,
wherein at least one of the number of transactional records of the ALP (8) is a smart contract transaction.

5. The asset tracking system of any of claim 1 - 4,
wherein the distributed database system (2) includes a plurality of node devices (701-703), and
more than one of the realms (510, 502) each include at least one of the plurality of node devices (701-703).

6. The asset tracking system of any of claims 1 - 5,
wherein the asset lifetime handler device (4) includes:
a programming interface means (401) configured to receive instruction data and to respond to the received instruction data by performing at least one of:
- creating, editing and/or invalidating the ALP (8) of the asset (9),
- registering a subscription for push notifications about a change of the ALP (8),
- transmitting, as response data, a copy of the ALP (8) and/or a portion thereof,
- storing a file included in the instruction data, the file being related to the asset (9) and/or
- retrieving and transmitting, as response data, the file being related to the asset (9).

7. The asset tracking system of any of claim 1 - 6,
wherein the asset lifetime handler device (4) further includes:
a repository means (404) configured to store a number of asset class descriptors (81-83), each asset class descriptor (81-83) including a number of asset attribute descriptors (811-834); and
a template feeder means (403) configured to, when responding to receiving instruction data specifying one of the number of asset class descriptors (81-83), create the ALP (8) for the asset (9) in the ledger of the distributed database system (2) based on the specified asset class descriptor (81-83) .

8. The asset tracking system of any of claim 1 - 7,
wherein the asset lifetime handler device (4) further includes:
an asset transaction layer, ATL, means (402) configured to update the ALP (8) maintained in the ledger of the distributed database system (2) when a change is detected in any of the one or more acquired asset attribute values.

9. The asset tracking system according to claim 8,
wherein the ATL means (402) is further configured to generate a push notification when an asset-based event is observed in the ALP (8) that is maintained in the ledger of the distributed database system (2).

10. The asset tracking system according to any of claims 1 - 9,
wherein the asset lifetime handler device (4) further comprises a document serving means (405) configured to:
- receive instruction data including a file related to the asset (9),
- store the received asset-related file for later retrieval,
- generate an asset attribute value including a link to the asset-related file and a hash value of the asset-related file, and
- transmit, as response data, the generated asset attribute value.

11. The asset tracking system of any of claims 1 - 10, wherein a control program adapted to control the asset-based industrial process in the plurality of realms (501-504) and/or at least part of the ATL means (402) is implemented as a number of smart contract transactions in the ledger of the distributed database system (2).

12. The asset tracking system of any of claims 6 - 11,
wherein the asset lifetime handler device (4) is configured to receive the instruction data from and/or to transmit the response data and/or the push notifications to a respective one of a number of operating entities, each operating entity being an entity that is involved in controlling the industrial process, is located in one of the plurality of realms (501-504), and is one of a human operator, an artificial intelligence apparatus, a robotic system, a computing device, an industrial controller, an enterprise resource planning system, one of the asset tracking devices (301-305), the asset (9).

13. The asset tracking system of claim 12,
wherein the distributed database system (2) is communicatively connected to the asset lifetime handler device (4), but is not communicatively connected to and/or is safeguarded against communications from the number of operating entities; and
the asset lifetime handler device (4) is communicatively connected to the number of operating entities in the plurality of realms (501-504).

14. The asset tracking system of any of claims 6 to 13, wherein the asset lifetime handler device (4) includes an access control means configured to perform an identity-based multi-level read/write access control on received instruction data and transmitted response data.

15. A method for tracking an asset (9) in an asset-based industrial process involving the asset (9) passing between a plurality of realms (501, 502), wherein there is limited mutual trust between the plurality of realms (501, 502), the method comprising:
hosting (S1) a consensus-based ledger of transactional records on a distributed database system (2),
acquiring (S2), over time by a respective one a plurality of asset tracking devices (301-305), one or more asset attribute values of the asset, wherein each of the realms (501, 502) includes at least one of the plurality of asset tracking devices (301-305), and
maintaining (S3), in the ledger of the distributed database system (2), based on the asset attribute values respectively acquired over time by the acquiring step, an asset lifetime passport, ALP (8), the ALP (8) constituting a digital representation of a history of the acquired asset attribute values of the asset (9).
